# EUROPEAN PATENT APPLICATION

(11) **EP 4 683 041 A1**
(43) Date of publication of application: **21.01.2026**
(21) Application number: 25762433.8
(22) Date of filing: 15.01.2025
(51) Int. Cl.: H01M 10/54, H01M 4/525, H01M 4/36, H01M 4/131, H01M 4/1391, H01M 10/0525, H01M 4/02

(54) **METHOD FOR REGENERATING CATHODE ACTIVE MATERIAL, AND REGENERATED CATHODE ACTIVE MATERIAL PREPARED THEREBY**

(30) Priority: 29.02.2024 KR 20240029794; 13.01.2025 KR 20250004745
(71) Applicant: LG Energy Solution, Ltd., Seoul 07335 (KR)
(72) Inventor: SEO, Yongsik, Daejeon 34122 (KR); PARK, Gwangseon, Daejeon 34122 (KR); CHOI, Jeong Mi, Daejeon 34122 (KR); PARK, Se Ho, Daejeon 34122 (KR); LEE, Jeongbae, Daejeon 34122 (KR); KIM, Yeon Jun, Daejeon 34122 (KR)
(74) Representative: Hoffmann Eitle
(86) International application number: PCT/KR2025/099009
(87) International publication number: WO 2025/183518

(57) **Abstract**

The present invention relates to a method of recycling a cathode active material and a recycled cathode active material prepared using the same. More particularly, the present invention relates to a method of recycling a cathode active material, the method including step (a) of thermally decomposing a binder and a conductive material in a cathode active material layer by heat-treating, at 300 to 650 °C, a waste cathode having the cathode active material layer formed on a current collector to separate the current collector from the cathode active material layer and recover a cathode active material in the cathode active material layer; step (b) of reheating the recovered cathode active material at 350 to 700 °C for 1 to 10 hours; step (c) of adding a lithium precursor to the reheat-treated cathode active material and performing annealing at 500 to 1000 °C; step (d) of washing the annealed cathode active material with a washing solution; and step (e) of surfacecoating the washed cathode active material with a coating agent, and a cathode active material prepared using the same.

## Description

### [Technical Field]

The present invention relates to a method of recycling a cathode active material and a recycled cathode active material prepared using the same. According to the present invention, by heat-treating a waste cathode to recover a cathode active material and reheat-treating the recovered cathode active material instead of pre-washing, impurities derived from a conductive material or binder remaining on the surface of the recovered cathode active material may be completely removed. As a result, the internal and external resistance of the cathode active material is reduced, so that the efficiency, lifespan characteristics, and resistance characteristics of a lithium secondary battery may be improved. In addition, the method of the present invention is environmentally friendly because the method does not use acid in the recovery and recycling process. Accordingly, process costs may be reduced as neutralization and wastewater treatment are not required. In addition, a cathode active material is recycled without decomposition of the cathode active material, so there are no discarded metal elements. In addition, since organic solvents are not used, there is no risk of generating toxic gases or explosion. In addition, a pre-washing process is omitted, thereby greatly improving economics and productivity.

### [Background Art]

### [Cross-Reference to Related Applications]

This application claims priority to Korean Patent Application No. 10-2024-0029794, filed on February 29, 2024, and Korean Patent Application No. 10-2025-0004745, re-filed on January 13, 2025, based on the priority of the above patent, in the Korean Intellectual Property Office, the disclosures of each of which are incorporated herein by reference.

In general, a lithium secondary battery consists of a cathode formed by coating a metal foil, such as aluminum, with a cathode active material layer; an anode formed by coating a metal foil, such as copper, with an anode active material layer; a separator for preventing mixing of the cathode and anode; and an electrolyte solution that allows lithium ions to move between the cathode and anode.

In the cathode active material layer, a lithium-based oxide is mainly used as an active material. In the anode active material layer, a carbon material is mainly used as an active material. In general, the lithium-based oxide contains rare metals such as cobalt, nickel, and manganese. Accordingly, studies on recovery and recycling of rare metals from the cathodes of lithium secondary batteries that are discarded after use or cathode scraps (hereinafter referred to as "waste cathodes") generated when manufacturing lithium secondary batteries are being actively conducted.

According to the related arts for recovering rare metals from a waste cathode, after dissolving a waste cathode using hydrochloric acid, sulfuric acid, or nitric acid, rare metals such as cobalt, manganese, and nickel are extracted using an organic solvent, and then the extracted metals are used as raw materials for synthesizing a cathode active material.

However, in the case of the method of extracting rare metals using an acid, a neutralization process and a wastewater treatment process are necessary due to environmental pollution problems, which greatly increases process costs. In addition, lithium, which is the main metal of a cathode active material, cannot be recovered by the above method.

To solve these drawbacks, methods (direct recycling methods) of directly recycling a cathode active material from a waste cathode without decomposing the cathode active material are being studied. As such methods, there are mainly four methods such as solvent dissolution, aluminum (Al) foil dissolution, crushing & screening, and calcination.

However, when using the solvent dissolution method, a recycled cathode active material having a relatively clean surface may be obtained. However, since a solvent such as N-methyl-2-pyrrolidone (NMP) used to dissolve a binder is a toxic gas and has an explosion hazard, the method has poor stability and requires an expensive solvent recovery process.

In addition, in the case of the aluminum foil dissolution method, process stability is good, process cost is low, and binder removal is easy. However, foreign substances that are difficult to remove are formed on the surface of a recycled cathode active material, and there is a risk of explosion due to hydrogen gas generated in a process of removing aluminum foil.

In addition, the crushing & screening method can be performed through the simplest process among the above methods. However, it is difficult to completely separate a current collector and a cathode active material, the particle size distribution of the cathode active material is changed during a crushing process, and the battery characteristics of the recycled cathode active material are degraded due to a residual binder.

In addition, the calcination method can be performed in a simple process, but has disadvantages such as formation of foreign substances on the surface of a recycled cathode active material, which degrades the rate performance of a battery. In addition to the above disadvantages, waste gas is generated, and energy consumption is excessive. However, compared to other methods, the above method has the advantages of not generating toxic gases, having no risk of explosion, and having excellent battery characteristics. However, in the calcination method, impurities that occur on the surface of a recycled cathode active material are mainly removed through washing. At this time, the impurities are not completely removed, and wastewater is generated during a washing process, which increases production costs and deteriorates battery characteristics.

Therefore, there is a need for the development of a method of recycling a cathode active material that does not discard metal elements by recycling a cathode active material from a waste cathode without decomposing the cathode active material and improves battery characteristics by completely removing impurities remaining on the surface of the recycled cathode active material.

### [Disclosure]

### [Technical Problem]

Therefore, the present invention has been made in view of the above problems, and it is one object of the present invention to provide a method of recycling a cathode active material. According to the method of the present invention, by heat-treating a waste cathode to recover a cathode active material and reheat-treating the recovered cathode active material instead of pre-washing, impurities derived from a conductive material or binder remaining on the surface of the recovered cathode active material may be completely removed, and thus the amount of wastewater generated may be reduced. In addition, the internal and external resistance of the recycled cathode active material is reduced, thereby providing a cathode active material having excellent efficiency, lifespan characteristics, and resistance characteristics. In addition, the method of the present invention is environmentally friendly because the method does not use acid in the recovery and recycling of a cathode active material. Accordingly, process costs may be reduced as neutralization and wastewater treatment are not required. In addition, a cathode active material is recycled without decomposition of the cathode active material, so there are no discarded metal elements. In addition, since organic solvents are not used, there is no risk of generating toxic gases or explosion. In addition, a pre-washing process is omitted, thereby greatly improving economics and productivity.

It is another object of the present invention to provide a recycled cathode active material having reduced internal and external resistance.

It is yet another object of the present invention to provide a secondary battery with delayed degradation due to the reduced internal and external resistance of a recycled cathode active material.

The above and other objects can be accomplished by the present invention described below.

### [Technical Solution]

I) In accordance with one aspect of the present invention, provided is a method of recycling a cathode active material, the method including (a) thermally decomposing a binder and a conductive material in a cathode active material layer by heat-treating, at 300 to 650 °C, a waste cathode having the cathode active material layer formed on a current collector to separate the current collector from the cathode active material layer and recover a cathode active material in the cathode active material layer; (b) reheating the recovered cathode active material at 350 to 700 °C for 1 to 10 hours; (c) adding a lithium precursor to the reheat-treated cathode active material and performing annealing at 500 to 1000 °C; (d) washing the annealed cathode active material; and (e) surface-coating the washed cathode active material with a coating agent.
II) According to I), in step (b), the reheat treatment temperature may be 450 to 650 °C.
III) According to I) or II), the cathode active material layer may include one or more selected from the group consisting of a nickel ·cobalt·manganese (NCM)-based cathode active material, a nickel·cobalt·aluminum (NCA)-based cathode active material, and a nickel·cobalt·manganese·aluminum (NCMA)-based cathode active material.
IV) According to I) to III), in step (a), the heat treatment may be performed for 30 minutes to 10 hours.
V) According to I) to IV), the heat treatment of step (a) or the reheat treatment of step (b) may be performed in air or under an oxygen atmosphere.
VI) According to I) to V), the cathode active material reheat-treated in step (b) may be subjected to the annealing of step (c) without washing.
VII) According to I) to VI), in step (c), the lithium precursor may include one or more selected from the group consisting of LiOH, Li₂CO₃, LiNO₃, and Li₂O.
VIII) According to I) to VII), in step (c), the lithium precursor may be added at least in an amount corresponding to a reduced amount of lithium based on a molar ratio of lithium in the cathode active material of step (a) based on an amount of lithium in the reheat-treated cathode active material.
IX) According to I) to VIII), in the washing of step (d), a weight ratio of the cathode active material to the washing solution may be 1:0.5 to 1:4.
X) According to I) to IX), the washing of step (d) may include mixing the annealed cathode active material and the washing solution and then performing filtration, and drying the solid cathode active material obtained after filtration.
XI) According to I) to X), the washing solution may be water or a basic aqueous lithium compound solution.
XII) According to I) to XI), the surface coating of step (e) may be performed by coating a surface with one or more of a metal, an organic metal, and a carbon component in solid or liquid form and then performing heat treatment at 100 to 700 °C.
XIII) According to I) to XII), the recycled cathode active material obtained after the surface coating may have an average resistance of 6.42 log(R/Ω) or less as measured using a scanning spreading resistance microscope (SSRM).
XIV) In accordance with another aspect of the present invention, provided is a cathode active material including one or more selected from the group consisting of lithium nickel oxide (LNO)-based cathode active materials, nickel·cobalt·manganese (NCM)-based cathode active materials, nickel·cobalt·aluminum (NCA)-based cathode active materials, and nickel·cobalt·manganese·aluminum (NCMA)-based cathode active materials, wherein, when a cathode electrode is manufactured by coating aluminum foil with slurry obtained by mixing 96.5 % by weight of the cathode active material, 1.5 % by weight of carbon black, and 2 % by weight of polyvinylidene fluoride (PVdF) with N-methyl-2-pyrrolidone (NMP), the cathode electrode is embedded in an epoxy resin, and ion milling is performed to create a cross-section, the cross-section has an average resistance of 6.42 log(R/Ω) or less as measured using a scanning spreading resistance microscope (SSRM) and/or has an a-Axis lattice parameter of 2.8742 to 2.8750 Å, a c-Axis lattice parameter of 14.203 to 14.209 Å, and a cell volume of 101.62 to 101.68 Å³ as measured by X-ray diffraction.
XV) According to XIV), the cathode active material may have a crystallite size of 86 to 89 nm as measured by X-ray diffraction.
XVI) According to XIV) or XV), a surface of the cathode active material may be coated with a coating agent containing a metal or carbon.
XVII) According to XIV) to XVI), the cathode active material may be a recycled cathode active material.
XVII) In accordance with yet another aspect of the present invention, provided is a secondary battery including the cathode active material according to any one of XIV) to XVII).

### [Advantageous Effects]

According to the present invention, the present invention provides a method of recycling a cathode active material. According to the method of the present invention, by recovering a cathode active material by heat-treating a waste cathode including a current collector and a cathode active material layer coated thereon, re-heating the recovered cathode active material, and then adding a lithium precursor thereto and performing annealing without a washing process, the internal and external resistance of the recycled cathode active material can be reduced, and thus the efficiency, lifespan characteristics, and resistance characteristics of the recycled cathode active material can be excellent. In addition, by subjecting a recovered cathode active material to reheat treatment instead of washing, impurities derived from a conductive material or a binder can be completely removed. In addition, since the annealed cathode active material is washed with a small amount of washing solution, wastewater can be significantly reduced.

In addition, the present invention has an effect of providing a method of recycling a cathode active material. According to the present invention, since acid is not used in the recovery and recycling of a cathode active material, the method is environmentally friendly. Accordingly, process costs can be reduced as neutralization and wastewater treatment are not required. In addition, a cathode active material is recycled without decomposition of the cathode active material, so there are no discarded metal elements. In addition, since organic solvents are not used, there is no risk of generating toxic gases or explosion, In particular, a pre-washing process is omitted, thereby greatly improving economics and productivity.

### [Description of Drawings]

The following drawings attached to this specification illustrate embodiments of the present invention, and are presented to further understand the technical idea of the present invention in combination with the detailed description described below. Accordingly, the present invention is not limited to these drawings.
FIG. 1 is a diagram showing cathode scraps that are discarded after cutting an electrode plate from a cathode sheet.
FIG. 2 includes log scale images obtained by processing and changing, in a log scale, resistance value data obtained using a scanning spreading resistance microscope (SSRM) for each of recycled or fresh cathode active materials prepared in Example 1, Comparative Examples 1 and 2, and Reference Example 1.
FIG. 3 is a flowchart for explaining a process for recycling a cathode active material according to the present invention.
FIG. 4 shows the results of weight change rates according to heat treatment temperatures analyzed by thermogravimetric analysis (TGA) for the cathode active materials of Reference Examples 2 and 3.

### [Best Mode]

The present inventors have studied a method (direct recycled method) of directly recycling a cathode active material having excellent battery performance from a waste cathode without decomposing the cathode active material. During the above study, the present inventors confirmed that, when a cathode active material recovered by heat-treating a waste cathode at a predetermined temperature was subjected to reheat treatment under a predetermined condition instead of washing, residual impurities derived from a conductive material or a binder were effectively removed, and the internal and external resistance of a cathode active material was reduced, thereby improving the efficiency, lifespan characteristics, and resistance characteristics of a lithium secondary battery. Based on these results, the present inventors conducted further studies to complete the present invention.

Hereinafter, a recycled cathode active material of the present invention, a method of recycling a cathode active material, and a secondary battery including the recycled cathode active material are described in detail.

The terms and words which are used in the present specification and the appended claims should not be construed as being confined to common meanings or dictionary meanings but should be construed as meanings and concepts matching the technical spirit of the present invention in order to describe the present invention in the best fashion. In addition, since the configurations shown in the examples and drawings of this specification are only embodiments of the present invention, and do not represent all the technical spirit of the present invention, it should be understood that there are many equivalents and variations that may be substituted for the above configurations, and that the present invention may be arranged, substituted, combined, separated, or designed in various other configurations.

Unless otherwise defined, all technical and scientific terms used in this description have the same meaning as commonly understood by those of ordinary skill in the art to which the present invention pertains.

### Method of recycling cathode active material

The method of recycling a cathode active material according to the present invention includes step (a) of thermally decomposing a binder and a conductive material in a cathode active material layer by heat-treating, at 300 to 650 °C, a waste cathode having the cathode active material layer formed on a current collector to separate the current collector from the cathode active material layer and recover a cathode active material in the cathode active material layer; step (b) of reheating the recovered cathode active material at 350 to 700 °C for 1 to 10 hours; step (c) of adding a lithium precursor to the reheat-treated cathode active material and performing annealing at 500 to 1000 °C; step (d) of washing the annealed cathode active material with a washing solution; and step (e) of surface-coating the washed cathode active material with a coating agent. In this case, by reheat treatment, impurities derived from a conductive material or binder remaining on the surface of the recovered cathode active material may be completely removed, and thus the internal and external resistance of the cathode active material may be reduced, thereby improving the lifespan characteristics of a secondary battery. In addition, the amount of wastewater generated may be reduced, which reduces process costs. In addition, the method of the present invention is environmentally friendly because the method does not use acid in the recovery and recycling of a cathode active material. Accordingly, process costs may be reduced as neutralization and wastewater treatment are not required. In addition, a cathode active material is recycled without decomposition of the cathode active material, so there are no discarded metal elements. In addition, since organic solvents are not used, there is no risk of generating toxic gases or explosion. In addition, a pre-washing process is omitted, thereby greatly improving economics and productivity.

Hereinafter, each step of the method of recycling a cathode active material will be described in detail.

### (a) Recovering cathode active material from waste cathode

Step (a) of recovering a cathode active material from a waste cathode according to the present invention may preferably include a step of thermally decomposing a binder and a conductive material in a cathode active material layer by heat-treating, at 300 to 650 °C, a waste cathode having the cathode active material layer formed on a current collector to separate the current collector from the cathode active material layer and recover a cathode active material in the cathode active material layer. In the case of the cathode active material recovered under these conditions, a simple process may be implemented, and a binder, a conductive material, and a current collector may be completely removed.

The waste cathode may be preferably a cathode separated from a lithium secondary battery discarded after use, or a defective cathode sheet or a cathode scrap generated in a process of manufacturing a lithium secondary battery, more preferably a cathode scrap remaining after blanking a cathode sheet to obtain a cathode plate.

The cathode active material layer of step (a) may preferably include a cathode active material, a binder, and a conductive material.

The cathode active material may include preferably one or more selected from the group consisting of a lithium cobalt oxide such as LiCoO₂ (hereinafter referred to as "LCO"); a lithium manganese oxide such as LiMnO₂ or LiMn₂O₄; a lithium iron phosphate compound such as LiFePO₄; a lithium nickel cobalt aluminum oxide (NCA); a lithium nickel oxide such as LiNiO₂; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide. More preferably, the cathode active material may be a nickel manganese-based lithium composite metal oxide, an NCM-based lithium composite transition metal oxide, or a mixture thereof. In this case, reversible capacity and thermal stability may be excellent.

As another specific example, the cathode active material may be a compound represented by Chemical Formula 1 below. In this case, reversible capacity and thermal stability may be excellent.

[Chemical Formula 1] LiₐNiₓMn_{y}Co_{z}M_{w}O_{2+δ}

In Chemical Formula 1, M includes one or more selected from the group consisting of B, W, Al, Ti, and Mg, 1<a≤1.1, 0<x<0.95, 0<y<0.8, 0<z<1.0, 0≤w≤0.1, -0.02≤δ≤0.02, x+y+z+w=1.

For example, based on 100 mol% in total of other metals other than Li, the cathode active material may include Ni in an amount of 40 mol% or more, preferably 50 mol% or more, more preferably 60 mol% or more, still more preferably 70 mol% or more, still more preferably 80 mol% or more, still more preferably 81 mol% or more, still more preferably 81 to 95 mol%. Within this range, the charging capacity, resistance characteristics, and capacity characteristics of a lithium secondary battery including the cathode active material may be excellent.

In the present disclosure, the Ni content may be measured by ion chromatography (IC) commonly used in the technical field to which the present invention pertains. As a specific example, an inductively coupled plasma (IC-ICP) analyzer, an IC-ICP-MS analyzer, or an IC-ICP-AEC analyzer may be used.

For example, the conductive material may be a carbon-based conductive material, preferably carbon black, CNT, or a mixture thereof.

For example, the binder may be a polymer binder, preferably polyvinylidene fluoride (PVdF), acrylonitrile-butadiene rubber (NBR), or a mixture thereof, more preferably polyvinylidene fluoride.

For example, the heat treatment in step (a) may be performed at 300 to 650 °C, preferably 400 to 600 °C, more preferably 500 to 600 °C, still more preferably 530 to 580 °C. Within this range, the current collector is not melted, and only the conductive material and binder are removed, allowing the cathode active material to be easily separated from the current collector. When the temperature range is exceeded, the current collector melts, making it difficult to separate only the cathode active material.

For example, the heat treatment may be performed at a temperature increase rate of 1 to 20 °C/min, preferably 3 to 10 °C/min, more preferably 3 to 7 °C/min. Within this range, heat treatment may be performed without putting a strain on heat treatment equipment, and thermal shock may be prevented from being applied to cathode scraps.

For example, the heat treatment may be performed in air or under an oxygen atmosphere, preferably in air. In this case, the binder and conductive material may be removed because carbon components in the binder and conductive material react with oxygen and disappears as gases such as CO and CO₂.

For example, the oxygen may have a purity of 59 % or more, preferably 70 % or more, more preferably 80 % or more, still more preferably 90 % or more, still more preferably 90 to 99 %. Within this range, the binder and the conductive material may be removed, and the stability of Ni in the cathode active material may be increased.

The purity (%) of the oxygen may be expressed as volume% or mol%.

The purity of oxygen in the present invention may be measured without particular limitations using measurement methods commonly used in the technical field to which the present invention pertains.

For example, the air or oxygen may be supplied at a rate of 1 to 20 L/min, preferably 1 to 15 L/min, more preferably 2 to 10 L/min, still more preferably 3 to 7 L/min. Within this range, a cathode active material may be easily separated from the current collector, and the separated cathode active material may be easily selected in powder form.

The heat treatment time may be preferably 10 minutes to 5 hours, more preferably 30 minutes to 5 hours, still more preferably 30 minutes to 2 hours, still more preferably 30 minutes to 1 hour. Within this range, since the current collector is not melted and only the binder is removed, a cathode active material may be easily separated from the current collector.

In the present disclosure, the heat treatment time is time of heat treatment performed at the corresponding heat treatment temperature, and does not include time required to reach the corresponding heat treatment temperature.

For example, after the heat treatment, slow or rapid cooling in air may be performed. As a specific example, after cooling to room temperature, a cathode active material may be recovered.

In the present disclosure, room temperature may be any point within the range of 20 ± 5 °C.

The recovered cathode active material may preferably be in powder form. In this case, heat treatment may be performed uniformly in the subsequent reheat treatment step.

In addition, the recovered cathode active material may preferably be introduced into the reheat treatment step after sieving. In this case, since the size of cathode active material powder is uniform, the heat treatment is evenly performed, so impurities are completely removed and the internal and external resistance of the cathode active material are reduced, so that the efficiency, lifespan characteristics, and resistance characteristics of a secondary battery may be improved.

For example, the sieving may be performed using a sieve with a mesh of 270 to 400, preferably 300 to 350. In this case, since the size of the recovered cathode active material is uniform, heat treatment may be performed evenly in the subsequent reheat treatment step.

In the present disclosure, sieving may be performed without any particular limitation using a sieving method or sieving means commonly used in the technical field to which the present invention belongs. As a specific example, sieving may be performed using an ultrasonic classifier or sieve.

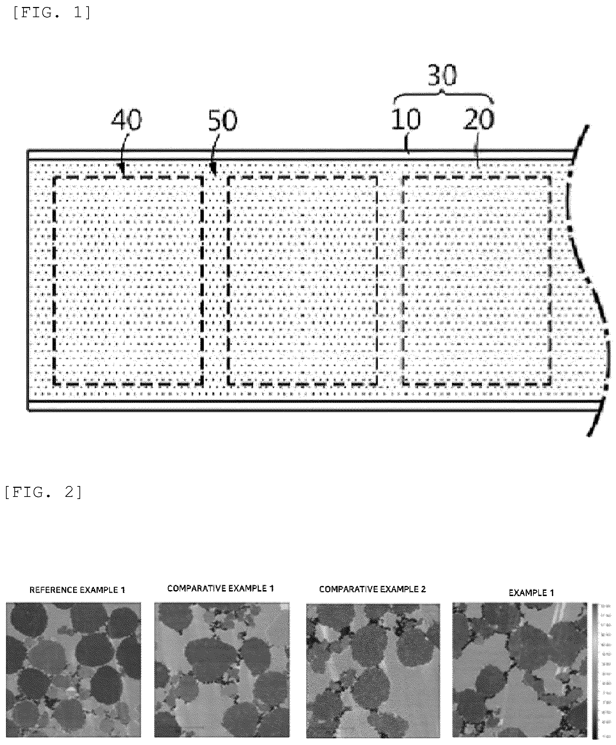

Referring to FIG. 1, aluminum foil 10, which is a long sheet-shaped cathode current collector, is coated with a cathode active material layer 20 including a cathode active material, a conductive material, and a binder to obtain a cathode sheet 30. Then, a cathode plate 40 is obtained by blanking the cathode sheet 30 to a certain size. At this time, portions remaining after the blanking are cathode scraps 50. The blanking is a means for cutting the cathode sheet.

In addition, the cathode active material layer 20 is formed by coating the aluminum foil 10 with slurry obtained by mixing a cathode active material, a conductive material, a binder, and a solvent. Since the slurry is very sensitive to environmental factors such as temperature, it is very difficult to determine the coating conditions. Accordingly, waste cathode sheets, such as the cathode scraps 50, are generated until the conditions for manufacturing the cathode sheet 30 of desired quality are determined through a predetermined test.

For reference, in the following examples, the cathode scraps 50 were used as waste cathodes.

### (b) Reheating recovered cathode active material

The method of recycling a cathode active material according to the present invention includes step (b) of reheating the recovered cathode active material at 350 to 700 °C for 1 to 10 hours. In this case, since impurities derived from a conductive material or binder remaining on the surface of the recovered cathode active material are thoroughly removed, the internal and external resistance of a cathode active material may be reduced, and thus efficiency, lifespan characteristics, and resistance characteristics may be excellent. In addition, by omitting pre-washing, the amount of wastewater generated may be reduced, thereby reducing costs.

For example, the reheat treatment temperature of step (b) may be performed at 350 to 700 °C, or 400 to 700 °C, preferably 450 to 650 °C, more preferably 500 to 650 °C, still more preferably 550 to 620 °C. Within this range, impurities derived from a conductive material or binder remaining on the surface of the recovered cathode active material may be thoroughly removed, and the internal and external resistance of a cathode active material may be reduced, so that efficiency, lifespan characteristics, and resistance characteristics may be excellent. When the reheat treatment temperature is less than 350 °C, since thermal decomposition of impurities derived from a conductive material or binder is not sufficient, the effect of reducing internal and external resistance may not be realized. When the reheat treatment temperature exceeds 700 °C, as the cathode active material deteriorates, internal and external resistance may increase.

The reheat treatment time of step (b) may be preferably 2 to 8 hours, more preferably 3 to 7 hours, still more preferably 4 to 6 hours. Within this range, impurities derived from a conductive material or binder remaining on the recovered cathode active material may be thoroughly removed.

In the present disclosure, the heat treatment time is time of heat treatment performed at the corresponding heat treatment temperature, and does not include time required to reach the corresponding heat treatment temperature.

For example, the reheat treatment of step (b) may be performed in air or under an oxygen atmosphere, preferably in air. In this case, impurities derived from a conductive material or binder remaining on the surface of the recovered cathode active material may be thoroughly removed.

For example, the air or oxygen may be supplied at a rate of 1 to 20 L/min, preferably 3 to 17 L/min, more preferably 5 to 15 L/min, still more preferably 7 to 13 L/min. Within this range, impurities derived from a conductive material or binder remaining on the surface of the recovered cathode active material may be thoroughly removed.

Since the current collector is removed by the heat treatment of step (a), the reheat treatment temperature of step (b) may be preferably equal to or higher than the heat treatment temperature of step (a). More preferably, the reheat treatment temperature of step (b) may be higher than the heat treatment temperature of step (a). In this case, impurities derived from a conductive material or binder remaining on the recovered cathode active material may be more thoroughly removed.

For example, the difference between the reheat treatment temperature of step (b) and the heat treatment temperature of step (a) may be 20 to 180 °C, preferably 20 to 130 °C, more preferably 20 to 80°C, still more preferably 20 to 50 °C, still more preferably 25 to 35 °C. Within this range, impurities derived from a conductive material or binder remaining on the surface of the recovered cathode active material may be more thoroughly removed.

For example, the reheat treatment of step (b) may be performed using the same equipment as the heat treatment of step (a).

Preferably, the cathode active material reheat-treated in step (b) may be subjected to annealing without washing. In this case, since the pre-washing process is omitted, the amount of wastewater generated may be reduced, and damage to the cathode active material may be minimized, thereby greatly improving economics and productivity.

### (c) Adding lithium precursor to reheat-treated cathode active material and performing annealing

The method of recycling a cathode active material according to the present invention includes step (c) of adding a lithium precursor to the reheat-treated cathode active material and performing annealing at 500 to 1000 °C. In this case, a cathode active material having excellent initial discharge capacity, rate performance, capacity characteristics, and resistance characteristics may be provided. In addition, since the process of pre-washing the recovered active material is omitted, economics and productivity may be greatly improved, and damage to the cathode active material may be minimized.

Annealing step (c) may be performed by adding a lithium precursor to the reheat-treated cathode active material and performing annealing in oxygen (O₂) or air. In this case, crystallinity, such as an increase in the crystallinity of the cathode active material and recovery of a crystal structure, may be improved, and the battery characteristics of a recycled cathode active material may be improved.

The annealing temperature may be preferably 500 to 1000 °C, more preferably 600 to 900 °C, still more preferably 650 to 850 °C, still more preferably 700 to 800 °C. In this case, crystallinity, such as an increase in the crystallinity of the cathode active material and recovery of a crystal structure, may be improved, and the battery characteristics of a recycled cathode active material may be improved.

The lithium precursor may include preferably one or more selected from the group consisting of LiOH, Li₂CO₃, LiNO₃, and Li₂O.

In step (c), the lithium precursor may be preferably added at least in an amount corresponding to the reduced amount of lithium based on a molar ratio of lithium in the cathode active material of step (a) based on the amount of lithium in the reheat-treated cathode active material. As a specific example, when the cathode active material of step (a) is the cathode active material represented by Chemical Formula 1, the lithium precursor may be added in an amount corresponding to a molar ratio of lithium of 0.0001 to 0.2, preferably 0.001 to 0.2, more preferably 0.005 to 0.19, still more preferably 0.01 to 0.18, still more preferably 0.05 to 0.17, most preferably 0.09 to 0.16 based on a molar ratio of 1 of lithium in the cathode active material. Within this range, by supplementing lithium to the recycled cathode active material, crystallinity may be increased, or a crystal structure may be recovered. Thus, the battery characteristics of the recycled cathode active material may be improved.

As another example, the lithium precursor may be added in an amount that may provide lithium corresponding to 1 to 40 mol%, preferably 1 to 30 mol%, more preferably 3 to 25 mol%, still more preferably 7 to 20 mol% based on 100 mol% in total of lithium contained in the cathode active material as a raw material. Within this range, since there is no lithium that causes an increase in the resistance of the recycled cathode active material, battery characteristics may be improved. In addition, compared to the past, economic advantages may be obtained because the crystal structure may be restored with a small amount of lithium precursor.

The annealing temperature may be adjusted within a limited range according to the melting point of the lithium precursor. For example, in the case of Li₂CO₃ as the lithium precursor, the melting point thereof is 723 °C, and thus annealing may be performed at preferably 700 to 900 °C, more preferably 710 to 780 °C. In the case of LiOH as the lithium precursor, the melting point thereof is 462 °C, and thus annealing may be performed at preferably 400 to 750 °C, more preferably 400 to 720 °C, still more preferably 450 to 720 °C, still more preferably 550 to 720 °C. Within this range, the crystal structure may be recovered, and thus the rate performance of a battery may be excellent.

The annealing temperature is preferably a temperature exceeding the melting point of the lithium precursor. However, when the annealing temperature exceeds 1000 °C, thermal decomposition of the cathode active material may occur, resulting in deterioration of battery performance. Accordingly, the annealing temperature is preferably 1000 °C or lower.

For example, the annealing time may be 1 to 15 hours, preferably 2 to 15 hours, more preferably 4 to 13 hours, still more preferably 6 to 12 hours, still more preferably 8 to 11 hours. Within this range, the crystal structure may be sufficiently recovered, and economics may be improved.

The annealing temperature may preferably be reached at a heating rate of 1 to 10 °C/min, more preferably 1 to 5 °C/min, still more preferably 2 to 4 °C/min. In this case, the crystallinity of a recycled cathode active material may be further increased, and thus the battery characteristics of a recycled cathode active material may be improved.

For example, the annealing step may include a cooling process. As a specific example, the cooling process may be natural cooling within a furnace. In this case, the crystallinity of a recycled cathode active material may be further increased, and thus the battery characteristics of a recycled cathode active material may be improved.

In the present disclosure, annealing may follow the definition used in the technical field to which the present invention pertains. As a specific example, annealing may be defined as a heat treatment operation that heals deformation or lattice defects and increases crystallinity by heating a cathode active material with a deformed structure or lattice defects for an appropriate period of time at a temperature, i.e., a temperature above a recrystallization temperature, that allows the atoms of main components in the cathode active material to sufficiently diffuse and move.

### (d) Washing annealed cathode active material (Surface modification step)

The method of recycling a cathode active material according to the present invention includes step (d) of washing the annealed cathode active material with a washing solution. In this case, lithium precursors that tend to remain on the surface of the cathode active material may be removed with a small amount of washing solution. Accordingly, in the subsequent steps, performance degradation and gas generation of a battery due to the reaction between a residual lithium compound and an electrolyte solution may be prevented, and wastewater may be reduced.

The washing may preferably include a step of mixing the annealed cathode active material and the washing solution and then performing filtration and a step of drying the solid cathode active material obtained after filtration. In this case, lithium compounds remaining in the cathode active material may be effectively removed.

For example, the weight ratio of the annealed cathode active material to the washing solution may be 1:0.5 to 1:4, preferably 1:0.5 to 1:3, more preferably 1:1 to 1:2.5. Within this range, lithium compounds remaining on the surface of the cathode active material may be effectively removed with a small amount of washing solution, and wastewater may be reduced.

The washing solution may be preferably water or a basic aqueous lithium compound solution, more preferably water. In this case, lithium compounds such as LiOH and Li₂CO₃ that are likely to remain in the cathode active material may be effectively removed with a small amount of washing solution, wastewater may be reduced, and the rate performance of a battery may be greatly improved.

The water may be preferably distilled water or deionized water. In this case, lithium compounds such as LiOH and Li₂CO₃ that are likely to remain on the surface of the cathode active material may be effectively removed with a small amount of washing solution, wastewater may be reduced, and the rate performance of a battery may be greatly improved.

The basic aqueous lithium compound solution may include a lithium compound preferably in an amount of greater than 0 % by weight and 15 % by weight or less, more preferably in an amount of greater than 0 % by weight and 10 % by weight or less. In this case, lithium compounds such as LiOH and Li₂CO₃ that are likely to remain on the surface of the cathode active material may be effectively removed with a small amount of washing solution, no wastewater treatment required, and the rate performance of a battery may be greatly improved.

Mixing of the annealed cathode active material and the washing solution may preferably be performed by agitation. The agitation is not particularly limited, but may be mechanical agitation or ultrasonic agitation.

The stirring may be performed for preferably 30 minutes, more preferably 20 minutes, still more preferably 15 minutes, still more preferably 5 to 10 minutes. Within this range, residual lithium compounds may be effectively removed.

For example, the filtration may be performed by using vacuum filtration using a filter or a filter press. In this case, the washing solution and the cathode active material may be easily separated.

The drying may be vacuum drying, and may be performed at 70 to 200 °C, more preferably 100 to 150 °C, still more preferably 120 to 140 °C under vacuum until the weight stops changing, for example, for 1 to 24 hours. Within this range, moisture contained in the washed cathode active material may be effectively removed.

Vacuum drying methods commonly used in the technical field to which the present invention pertains may be used in the present invention without particular limitation. For example, the vacuum drying may include drying under partial vacuum or low pressure.

In the present disclosure, the pre-washing refers to washing performed before introducing a lithium precursor, and the post-washing refers to washing performed after introducing a lithium precursor and annealing.

### (e) Coating surface of washed cathode active material

The method of recycling a cathode active material according to the present invention includes step (e) of coating the surface of the washed cathode active material with a coating agent. In this case, structural stability and electrochemical performance may be improved while maintaining the intrinsic properties of the cathode active material.

In the surface coating, preferably, the surface may be coated with a coating agent including one or more of a metal, an organic metal, and a carbon component in a solid or liquid manner, and then heat treatment may be performed at 100 to 700 °C. In this case, structural stability and electrochemical performance may be improved while maintaining the intrinsic properties of the cathode active material.

The coating agent including a metal may be preferably a coating agent including one or more selected from the group consisting of B, W, Al, Ti, Mg, Ni, Co, Mn, Si, Zr, Ge, Sn, Cr, Fe, V, and Y, more preferably a coating agent including one or more selected from the group consisting of B, W, Al, Ti, and Mg, still more preferably a coating agent including boron (B), tungsten (W), or a mixture thereof, still more preferably a coating agent including tungsten (W) and boron (B), as a specific example, a coating agent including tungsten boride (WB). In this case, resistance characteristics and lifespan characteristics may be improved.

For example, the coating agent including a metal may be an oxide or an acid including the metal as an element in the molecule thereof.

As the coating agent including an organic metal, coating agents including an organic metal compound containing a metal commonly used in the art to which the present invention pertains may be used without particular limitation. As a specific example, metal alkoxides may be used.

As the coating agent including a carbon component, coating agents including a carbon component commonly used in the art to which the present invention pertains may be used without particular limitation. As a specific example, sugars such as sucrose may be used.

For example, based on components coated on the surface of the cathode active material excluding a solvent, based on 1 mol% of the metal in the cathode active material before coating, the coating agent may be included in an amount of 0.001 to 0.3 mol%, preferably 0.01 to 0.3 mol%, more preferably 0.01 to 0.15 mol%, still more preferably 0.01 to 0.1 mol%, still more preferably 0.01 to 0.05 mol%. Within this range, structural stability and electrochemical performance may be improved while maintaining the intrinsic properties of the cathode active material.

The heat treatment temperature may be preferably 150 to 600 °C, more preferably 200 to 500 °C, still more preferably 250 to 450 °C, still more preferably 300 to 400 °C. Within this range, performance degradation due to the thermal decomposition of a cathode active material may be prevented, and structural stability and electrochemical performance may be improved.

The heat treatment time may be preferably 1 to 10 hours, more preferably 2 to 8 hours, still more preferably 3 to 7 hours, still more preferably 4 to 6 hours, still more preferably 4.5 to 5.5 hours. Within this range, structural stability and electrochemical performance may be improved while maintaining the intrinsic properties of the cathode active material.

Coating methods commonly used in the art to which the present invention pertains may be used as the coating method of the present invention without particular limitation. For example, a liquid method of mixing a cathode active material and a liquid coating agent, a mechanochemical method using the high mechanical energy of ball milling, a fluid bed coating method, a spray drying method, a precipitation method of precipitating a coating agent onto the surface of a cathode active material in an aqueous solution, a method using reaction between a vapor phase coating agent and a cathode active material, or sputtering may be used.

For example, the metal, organic metal, and carbon component may have a spherical shape, a plate shape, a square shape, or a needle shape. For example, such a shape may be controlled by changing process conditions in the preparation process. Each shape is not particularly limited as long as the shape follows a definition commonly accepted in the art to which the present invention pertains.

The coating agent may have preferably an average diameter of 1 to 1000 nm and a specific surface area of 10 to 100 m²/g, more preferably an average diameter of 10 to 100 nm and a specific surface area of 20 to 100 m²/g. Within this range, the coating agent may be uniformly adhered to the surface of the cathode active material, thereby improving the structural stability of the cathode active material. Thus, reduction of the lifespan of the cathode active material and degradation of the electrochemical performance thereof due to lattice deformation or collapse of a crystal structure may be prevented.

In the present disclosure, the average diameter may be measured by a measuring method commonly used in the art to which the present invention pertains. For example, the average diameter may be measured by a laser diffraction method. Specifically, cathode active material particles are dispersed in a dispersion medium, the dispersed particles are placed in a commercially available laser diffraction particle size measuring device such as Microtrac MT 3000, and the particles are irradiated with an ultrasonic wave of about 28 kHz with an output of 60 W. Then, an average particle diameter (D₅₀) is calculated based on 50 % of the particle size distribution in the measuring device.

In the present disclosure, the specific surface area may be measured by a measuring method commonly used in the art to which the present invention pertains. For example, the specific surface area may be measured by Brunauer-Emmett-Teller (BET) method. Specifically, the specific surface area may be calculated based on the amount of nitrogen gas adsorbed under liquid nitrogen temperature (77 K) using BELSORP-mino II manufactured by BEL Japan Co.

When a cathode electrode is manufactured by coating aluminum foil with slurry obtained by mixing 96.5 % by weight of the recycled cathode active material obtained after the surface coating, 1.5 % by weight of carbon black, and 2 % by weight of polyvinylidene fluoride (PVdF) with N-methyl-2-pyrrolidone (NMP), the cathode electrode is embedded in an epoxy resin, and ion milling is performed to create a cross-section, the average resistance of the cross-section may be 6.42 log(R/Ω) or less, preferably 6.35 log (R/Ω) or less, more preferably 6.30 log(R/Ω) or less, still more preferably 0.1 to 6.30 log(R/Ω) as measured using a scanning spreading resistance microscope (SSRM). In this case, since impurities derived from a conductive material or binder remaining on the surface of the recovered cathode active material after heat treatment may be more thoroughly removed by reheat treatment at a predetermined temperature for a predetermined period of time instead of pre-washing, the average resistance may be reduced. In addition, since the pre-washing process is omitted, economics and productivity may be improved. In addition, the efficiency, lifespan characteristics, and resistance characteristics of a secondary battery may be excellent.

For example, when a cathode electrode is manufactured by coating aluminum foil with slurry obtained by mixing 96.5 % by weight of the recycled cathode active material obtained after the surface coating, 1.5 % by weight of carbon black, and 2 % by weight of polyvinylidene fluoride (PVdF) with N-methyl-2-pyrrolidone (NMP), the cathode electrode is embedded in an epoxy resin, and ion milling is performed to create a cross-section, an average resistance standard deviation measured using a scanning spreading resistance microscope (SSRM) from a log scale image obtained by processing and changing resistance value data obtained from the cross-section into a log scale may be 0.42 or less, preferably 0.33 or less, preferably 0.31 or less, more preferably 0.1 to 0.31. In this case, since impurities derived from a conductive material or binder remaining on the surface of the recovered cathode active material after heat treatment may be more thoroughly removed by reheat treatment at a predetermined temperature for a predetermined period of time instead of pre-washing, the average resistance may be reduced. In addition, since the pre-washing process is omitted, economics and productivity may be improved. In addition, the efficiency, lifespan characteristics, and resistance characteristics of a secondary battery may be excellent.

In the present disclosure, the NX-10 AFM system (Park Systems Co.) with SSRM module may be used as a scanning spreading resistance microscope, and SmartScan (Park Systems Co.) may be used as an operating software. As specific driving conditions, the contact mode may be set, image pixels to be acquired may be set to 1024 × 1024, the scan rate may be set to 0.2 Hz or more and 0.25 Hz or less, the bias may be set to 2.0 V or less, and the set point may be set to 1.0 V or less. In addition, as an AFM probe, solid diamond AFM probes (IMEC Co.) made of boron-doped polycrystalline diamond with a length of 465 µm, a width of 50 µm, and a thickness of 5 µm may be used.

For example, the recycled cathode active material obtained after the surface coating may have an a-Axis lattice parameter of 2.8742 to 2.8750 Å, preferably 2.8744 to 2.8748 Å, more preferably 2.8745 to 2.8747 Å as measured by X-ray diffraction. Within this range, the efficiency, lifespan characteristics, and resistance characteristics of a secondary battery may be excellent.

For example, the recycled cathode active material obtained after the surface coating may have a c-Axis lattice parameter of 14.203 to 14.209 Å, preferably 14.204 to 14.207 Å, more preferably 14.205 to 14.207 Å as measured by X-ray diffraction. Within this range, the efficiency, lifespan characteristics, and resistance characteristics of a secondary battery may be excellent.

For example, the recycled cathode active material obtained after the surface coating may have a cell volume of 101.62 to 101.68 Å³, preferably 101.64 to 101.67 Å³, more preferably 101.65 to 101.66 Å³ as measured by X-ray diffraction. Within this range, the efficiency, lifespan characteristics, and resistance characteristics of a secondary battery may be excellent.

For example, the recycled cathode active material obtained after the surface coating may have a crystallite size of 86 to 89 nm, preferably 87 to 89 nm, more preferably 87 to 88 nm as measured by X-ray diffraction. Within this range, the efficiency, lifespan characteristics, and resistance characteristics of a secondary battery may be excellent.

In addition, the present invention may provide a recycled cathode active material prepared using the method of recycling a cathode active material. In this case, initial discharge capacity, rate performance, capacity characteristics, and resistance characteristics may be excellent.

### Cathode active material

The cathode active material of the present invention is prepared using the method of recycling a cathode active material. In this case, the internal and external resistance of a cathode active material may be reduced, and thus the efficiency, lifespan characteristics, and resistance characteristics of a secondary battery may be excellent.

In addition, the cathode active material of the present invention may include one or more selected from the group consisting of lithium nickel oxide (LNO)-based cathode active materials, nickel·cobalt·manganese (NCM)-based cathode active materials, nickel·cobalt·aluminum (NCA)-based cathode active materials, and nickel·cobalt·manganese·aluminum (NCMA)-based cathode active materials. When a cathode electrode is manufactured by coating aluminum foil with slurry obtained by mixing 96.5 % by weight of the cathode active material, 1.5 % by weight of carbon black, and 2 % by weight of polyvinylidene fluoride (PVdF) with N-methyl-2-pyrrolidone (NMP), the cathode electrode is embedded in an epoxy resin, and ion milling is performed to create a cross-section, the cross-section has an average resistance of 6.42 log(R/Ω) or less as measured using a scanning spreading resistance microscope (SSRM) and/or has an a-Axis lattice parameter of 2.8742 to 2.8750 Å, a c-Axis lattice parameter of 14.203 to 14.209 Å, and a cell volume of 101.62 to 101.68 Å³ as measured by X-ray diffraction. In this case, the internal and external resistance of a cathode active material may be reduced, and thus the efficiency, lifespan characteristics, and resistance characteristics of a secondary battery may be excellent.

As another specific example, the cathode active material may include a compound represented by Chemical Formula 1 below. In this case, the efficiency, lifespan characteristics, and resistance characteristics may be excellent.

[Chemical Formula 1] LiₐNiₓMn_{y}Co_{z}M_{w}O_{2+δ}

(In Chemical Formula 1, M includes one or more selected from the group consisting of B, W, Al, Ti, and Mg, and 1<a≤1.1, 0<x<0.95, 0<y<0.8, 0<z<1.0, 0≤w≤0.1, - 0.02≤δ≤0.02, x+y+z+w=1)

For example, based on 100 mol% in total of other metals other than Li, the cathode active material may include Ni in an amount of 40 mol% or more, preferably 50 mol% or more, more preferably 60 mol% or more, still more preferably 70 mol% or more, still more preferably 80 mol% or more, still more preferably 81 mol% or more, still more preferably 81 to 95 mol%. Within this range, initial discharge capacity, rate performance, capacity characteristics, and resistance characteristics may be excellent.

For example, when a cathode electrode is manufactured by coating aluminum foil with slurry obtained by mixing 96.5 % by weight of the cathode active material, 1.5 % by weight of carbon black, and 2 % by weight of polyvinylidene fluoride (PVdF) with N-methyl-2-pyrrolidone (NMP), the cathode electrode is embedded in an epoxy resin, and ion milling is performed to create a cross-section, the cross-section may have an average resistance of 6.42 log (R/Ω) or less, preferably 6.35 log(R/Ω) or less, more preferably 6.30 log(R/Ω) or less, still more preferably 0.1 to 6.30 log(R/Ω) as measured using a scanning spreading resistance microscope (SSRM). In this case, since impurities derived from a conductive material or binder remaining on the surface of the recovered cathode active material after heat treatment may be more thoroughly removed by reheat treatment at a predetermined temperature for a predetermined period of time instead of pre-washing, the average resistance may be reduced. In addition, since the pre-washing process is omitted, economics and productivity may be improved. In addition, the efficiency, lifespan characteristics, and resistance characteristics of a secondary battery may be excellent.

For example, when a cathode electrode is manufactured by coating aluminum foil with slurry obtained by mixing 96.5 % by weight of the cathode active material, 1.5 % by weight of carbon black, and 2 % by weight of polyvinylidene fluoride (PVdF) with N-methyl-2-pyrrolidone (NMP), the cathode electrode is embedded in an epoxy resin, and ion milling is performed to create a cross-section, an average resistance standard deviation measured using a scanning spreading resistance microscope (SSRM) from a log scale image obtained by processing and changing resistance value data obtained from the cross-section into a log scale may be 0.42 or less, preferably 0.33 or less, preferably 0.31 or less, more preferably 0.1 to 0.31. In this case, since impurities derived from a conductive material or binder remaining on the surface of the recovered cathode active material after heat treatment may be more thoroughly removed by reheat treatment at a predetermined temperature for a predetermined period of time instead of pre-washing, the average resistance may be reduced. In addition, since the pre-washing process is omitted, economics and productivity may be improved. In addition, the efficiency, lifespan characteristics, and resistance characteristics of a secondary battery may be excellent.

For example, the cathode active material may have an a-Axis lattice parameter of 2.8742 to 2.8750 Å, preferably 2.8744 to 2.8748 Å, more preferably 2.8745 to 2.8747 Å as measured by X-ray diffraction. Within this range, the efficiency, lifespan characteristics, and resistance characteristics of a secondary battery may be excellent.

For example, the cathode active material may have a c-Axis lattice parameter of 14.203 to 14.209 Å, preferably 14.204 to 14.207 Å, more preferably 14.205 to 14.207 Å as measured by X-ray diffraction. Within this range, the efficiency, lifespan characteristics, and resistance characteristics of a secondary battery may be excellent.

For example, the cathode active material may have a cell volume of 101.62 to 101.68 Å³, preferably 101.64 to 101.67 Å³, more preferably 101.65 to 101.66 Å³ as measured by X-ray diffraction. Within this range, the efficiency, lifespan characteristics, and resistance characteristics of a secondary battery may be excellent.

For example, the cathode active material may have a crystallite size of 86 to 89 nm, preferably 87 to 89 nm, more preferably 87 to 88 nm as measured by X-ray diffraction. Within this range, the efficiency, lifespan characteristics, and resistance characteristics of a secondary battery may be excellent.

For example, the surface of the cathode active material may be coated with a metal or carbon, preferably a metal. In this case, the structural stability of the cathode active material may be improved without chemical and physical changes thereof, thereby improving rate performance, lifespan characteristics, and electrochemical properties such as capacity. In addition, substitution with heterogeneous elements occurs on the surface of the cathode active material, and as a result, the amount of residual lithium and pH may be reduced, thereby improving physicochemical properties.

The metal includes preferably one or more selected from the group consisting of B, W, Al, Ti, Mg, Ni, Co, Mn, Si, Zr, Ge, Sn, Cr, Fe, V, and Y, more preferably one or more selected from the group consisting of B, W, Al, Ti, and Mg, still more preferably boron (B), tungsten (W), or a mixture thereof, still more preferably tungsten (W) and boron (B), as a specific example, tungsten boride (WB). In this case, resistance characteristics and lifespan characteristics may be improved.

For example, the coating agent may be included in an amount of 0.001 to 0.3 mol%, preferably 0.01 to 0.3 mol%, more preferably 0.01 to 0.15 mol%, still more preferably 0.01 to 0.1 mol%, still more preferably 0.01 to 0.05 mol% based on 1 mol% of metals in the recycled cathode active material before coating. Within this range, structural stability and electrochemical performance may be improved while maintaining the intrinsic properties of the cathode active material.

In the surface coating, preferably, the surface may be coated with a coating agent including one or more of a metal, an organic metal, and a carbon component in a solid or liquid manner, and then heat treatment may be performed at 100 to 1200 °C. In this case, structural stability and electrochemical performance may be improved while maintaining the intrinsic properties of the cathode active material.

For example, the cathode active material may be a recycled cathode active material. In this case, economics and productivity may be excellent.

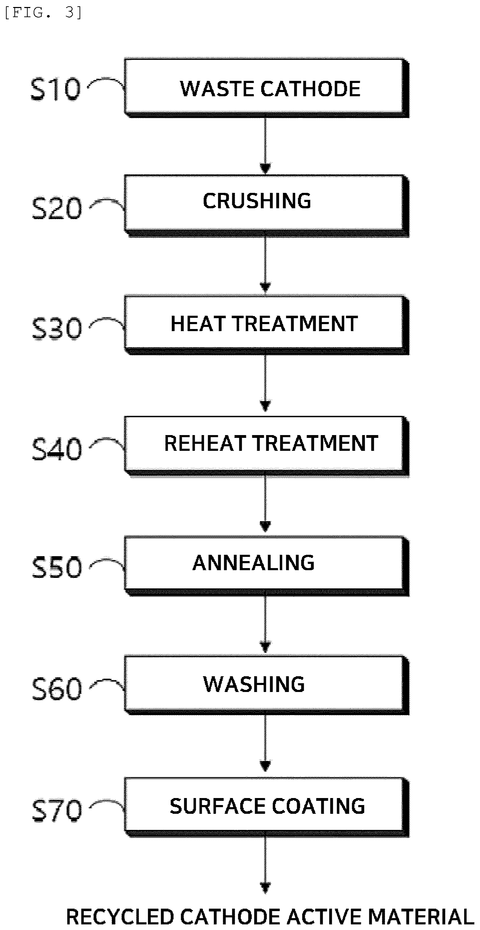

FIG. 3 below is a flowchart for explaining a process for recycling a cathode active material according to one embodiment of the present invention.

Referring to FIG. 3, first, cathode scraps as waste cathodes are prepared (step S10).

For example, aluminum foil is coated with slurry prepared by adding N-methyl pyrrolidone (NMP) to an NCMA-based lithium composite transition metal oxide, carbon black, and polyvinylidene fluoride and performing mixing, and then drying is performed in a vacuum oven set to about 120 °C to obtain a cathode sheet. Then, the cathode sheet is punched out to obtain a cathode plate of a certain size. In this process, cathode scraps are generated.

The cathode scrap includes a cathode active material layer formed on an aluminum foil. After volatilizing a solvent, the cathode active material layer has a structure in which a cathode active material and a conductive material are combined by a binder. Accordingly, when the binder is removed, the cathode active material is separated from the aluminum foil.

Next, the prepared cathode scraps are crushed into pieces of appropriate sizes (step S20).

Here, the crushing includes cutting or shredding cathode scraps into easy-to-handle sizes. As a specific example, the crushed cathode scraps may have a size of 1 cm × 1 cm. For example, the crushing may be performed using a dry crushing device such as a hand-mill, a pin-mill, a disk-mill, a cutting-mill, and a hammer-mill. To increase productivity, a high-speed cutting machine may be used.

Preferably, whether to perform the crushing or the size of the pieces may be determined by considering the handling of cathode scraps and the characteristics of equipment used in the subsequent process. For example, when using equipment capable of continuous processing, cathode scraps must be crushed into smaller pieces because the pieces must have good fluidity.

Next, the cathode scraps are heat-treated to recover a cathode active material (step S30).

Here, heat treatment is performed to thermally decompose the binder in the active material layer.

By the heat treatment describe above, a binder and a conductive material in a cathode active material layer are thermally decomposed into CO₂ and H₂O and removed. That is, since the binder is removed, a cathode active material is separated from a current collector, and the separated cathode active material is easily selected as a powder form. Accordingly, only step S30 may separate the cathode active material layer from the current collector, and the cathode active material within the active material layer may be recovered in a powder form.

The heat treatment may be performed in air or under an oxygen atmosphere, as a specific example, in air. When the heat treatment is performed in a reducing gas or inert gas atmosphere, the binder and the conductive material are carbonized rather than thermally decomposed. When the binder and the conductive material are carbonized, carbon components remain on the surface of the cathode active material, resulting in deterioration in the performance of a recycled cathode active material. However, when the heat treatment is performed in air or under an oxygen atmosphere, both the binder and the conductive material are removed because carbon components in the binder and conductive material reacts with oxygen, are converted into gases such as CO and CO₂, and disappears.

The heat treatment is performed at preferably 300 to 650 °C, as a specific example, 570 °C. When the heat treatment is performed at a temperature less than 300 °C, since the binder is not removed, separation of the current collector is difficult. When the heat treatment is performed at a temperature exceeding 650 °C, the current collector melts, making separation of the current collector impossible.

The heat treatment is performed at a temperature increase rate of preferably 1 to 20 °C/min, more preferably 3 to 10 °C/min, as a specific example, 5 °C/min. Within this range, heat treatment may be performed without causing strain to heat treatment equipment, and thermal shock to cathode scraps may be prevented.

The heat treatment may be performed until the binder is completely thermally decomposed. For example, the heat treatment may be performed for preferably 30 minutes or more, more preferably 30 minutes to 5 hours, as a specific example, 30 minutes. Within this range, the binder may be completely thermally decomposed, and thermal decomposition efficiency may be excellent.

For example, the heat treatment may be performed using various types of furnaces. For example, a box-type furnace may be used. Considering productivity, a rotary kiln capable of continuous processing may be used.

After the heat treatment, slow cooling or rapid cooling may be performed in the air. As a specific example, after cooling to room temperature, a cathode active material may be recovered.

In the present disclosure, room temperature may be any point within the range of 20 ± 5 °C.

For example, the recovered cathode active material may be collected in a uniform size through sieving. Preferably, the sieving may be performed using a sieve with 270 to 400 mesh, more preferably using a sieve with 300 to 350 mesh. In this case, in the subsequent reheat treatment step, the cathode active material is uniformly heat-treated so that the binder and the conductive material may be completely removed.

Next, the recovered cathode active material is reheat-treated (step S40).

Here, the reheat treatment is performed to more thoroughly remove the binder and conductive material remaining in the cathode active material recovered after the heat treatment in step S30. By performing heat treatment instead of pre-washing, impurities derived from the binder or conductive material may be removed more easily. Also, since pre-washing is omitted, the amount of wastewater generated may be reduced.

The reheat treatment may be performed in air or under an oxygen atmosphere. In this case, since impurities derived from the binder or conductive material remaining in the recovered cathode active material are thoroughly removed, the internal and external resistance of a cathode active material may be reduced, and thus the efficiency, lifespan characteristics, and resistance characteristics may be excellent.

For example, the air or oxygen may be supplied at a rate of 1 to 20 L/min, as a specific example, 3 L/min. Within this range, impurities derived from the binder or conductive material may be thoroughly removed without damaging the cathode active material.

The reheat treatment temperature may be 350 to 700 °C, as a specific example, 400 to 600 °C. Within this range, the binder and the conductive material may be completely removed without damaging the cathode active material.

The reheat treatment may be performed at a temperature increase rate of preferably 1 to 20 °C/min, more preferably 3 to 10 °C/min, as a specific example, 5 °C/min. Within this range, heat treatment may be performed without putting a strain on heat treatment equipment, and thermal shock may be prevented from being applied to the cathode active material.

For example, the reheat treatment time may be 1 to 10 hours, as a specific example, 3 to 7 hours or 5 hours. Within this range, impurities derived from the binder or conductive material may be completely removed without damaging the cathode active material.

Since the current collector is removed by the heat treatment of step S30, the reheat treatment temperature of step S40 may be preferably equal to or higher than the heat treatment temperature of step S30. More preferably, the reheat treatment temperature of step S40 may be higher than the heat treatment temperature of step S30. In this case, impurities derived from a conductive material or binder remaining on the recovered cathode active material may be more thoroughly removed.

For example, the difference between the reheat treatment temperature of step S40 and the heat treatment temperature of step S30 may be 20 to 180 °C, as a specific example, 25 to 35 °C. Within this range, impurities derived from the conductive material or binder remaining on the recovered cathode active material may be thoroughly removed.

The reheat treatment may be performed by using the same or similar equipment as in heat treatment step S30.

For example, after the reheat treatment, slow or rapid cooling in air may be performed. As a specific example, after cooling to room temperature, a cathode active material may be recovered.

Next, a lithium precursor is added to the reheat-treated cathode active material, and annealing is performed (step S50).

In the annealing step, it is important to add a lithium precursor directly to the reheat-treated cathode active material without a washing process and perform annealing. In this case, since the pre-washing process is omitted, economics and productivity may be greatly improved, and battery performance may be improved.

In addition, loss of lithium in the cathode active material occurs during preceding steps S30 and S40. In step S50, the loss amount of lithium is supplemented. In addition, during the preceding step, a deformed structure (e.g., Co₃O₄ in the case of an LCO active material) may be formed on the surface of the cathode active material. In step S50, the crystal structure of the cathode active material may be recovered through annealing, thereby improving the battery characteristics of a recycled cathode active material, or restoring the battery characteristics of the recycled cathode active material to the level of battery characteristics of a fresh cathode active material. Here, "fresh" is a concept opposite to "recycling", a fresh material means that the material was made for the first time, and the fresh material is the same word as "raw material" used in the examples.

As a specific example, LiOH is used as the lithium precursor.

Based on the molar ratio of lithium to other metals in a fresh cathode active material contained in the cathode active material layer, the lithium precursor is preferably added in a minimum amount corresponding to the lost lithium molar ratio. When an excess of lithium precursor is added relative to the amount of lithium lost, the unreacted lithium precursor may remain in a recycled cathode active material, which increases resistance. Accordingly, an appropriate amount of the lithium precursor needs to be added. For example, when the molar ratio of lithium to other metals in a fresh cathode active material is 1, the lithium precursor may be added in an amount such that the molar ratio of lithium is 0.001 to 0.4, preferably 0.01 to 0.2.

As a specific example, when the lithium precursor is added in a molar ratio of 0.09 to 0.1 (based on lithium), which is a loss ratio relative to a lithium content in a fresh cathode active material, based on ICP analysis results, the capacity may be increased to a level equivalent to that of the fresh cathode active material. Here, the ICP analysis results have an error value of about ±0.02.

For example, the annealing may be performed at 500 to 1000 °C in oxygen (O₂) or air. As a specific example, the annealing may be performed at 700 to 800 °C in air. In this case, the temperature should be determined within a limited range according to the types of the lithium precursor.

The annealing temperature is preferably a temperature exceeding the melting point of the lithium precursor. However, since performance degradation occurs due to thermal decomposition of the cathode active material at a temperature exceeding 1000 °C, the annealing temperature should not exceed 1000 °C. When Li₂CO₃ is used as the lithium precursor, the annealing temperature is preferably 700 to 900 °C, more preferably 710 to 780 °C, most preferably 750 to 780 °C. In addition, when LiOH is used as the lithium precursor, the annealing temperature is preferably 400 to 750 °C, more preferably 450 to 720 °C, most preferably 550 to 720 °C.

For example, the annealing time is preferably 1 hour or more, more preferably 15 hours or less, still more preferably 10 hours. When the annealing time is long, a crystal structure may be sufficiently recovered, but even long-term annealing does not significantly affect performance. In this case, the same or similar equipment as in step S30 of performing heat treatment may be used as the annealing equipment.

Next, the annealed cathode active material is washed (step S60).

In the washing step S60, lithium precursors that do not participate in the reaction in the annealing step S50 and exist on the surface of the cathode active material in the form of LiOH and Li₂CO₃ are removed. In addition, the impurities, such as lithium carbonate (Li₂CO₃), remaining on the surface of a recycled cathode active material may react with an electrolyte solution, deteriorating battery performance and generating gas, so these impurities must be thoroughly removed.

In the washing step S60, preferably, the cathode active material of annealing step S50 is mixed with a washing solution in a weight ratio of 1:0.5 to 1:4, as a specific example, 1:1 to 1:2, and filtration is performed. Then, the obtained solid cathode active material is dried.

Preferably, as the washing solution, a basic aqueous lithium compound solution containing water or an alkaline lithium compound in an amount of greater than 0 % by weight and 10 % by weight or less may be used. More preferably, distilled water may be used as the washing solution. In this case, safety may be ensured, costs may be reduced, and the elution of transition metals present in the cathode active material may be prevented.

The water may be preferably distilled water or deionized water.

For example, the basic aqueous lithium compound solution may include an alkaline lithium compound in an amount of greater than 0 % by weight and 15 % by weight or less. When the lithium compound is not included, it is difficult to replenish lithium. When the amount exceeds 15 % by weight, an excessive amount of lithium compound may remain on the surface of the cathode active material, which may adversely affect the subsequent annealing process.

In the washing, preferably, the annealed cathode active material is mixed with a washing solution, filtration is performed, and the obtained solid cathode active material is dried.

Mixing of the annealed cathode active material and the washing solution may preferably be performed by agitation. The agitation is not particularly limited, but may be mechanical agitation or ultrasonic agitation.

The mechanical agitation may be preferably performed at 250 to 350 rpm for 3 to 10 minutes.

For example, the filtration may be performed by using vacuum filtration using a filter or a filter press.

As a specific example, the drying is vacuum drying at 120 to 140 °C.

Next, the washed cathode active material may be subjected to surface coating (step S70).

For example, in the surface coating, the surface is coated with a coating agent containing metals, organic metals, or carbon in a solid or liquid phase and heat-treated. When the heat treatment temperature is too low, formation of a desired surface protection layer by the dissimilar metals may not occur. When the heat treatment temperature is too high, due to thermal decomposition of the cathode active material, battery performance may deteriorate.

Specifically, when the washed cathode active material is coated with a metal oxide such as B, W, and B-W or an acid and heat-treated, a surface protection layer such as a lithium boron oxide layer is formed on the surface of the cathode active material.

The surface coating may be performed using a solid-phase or liquid-phase method, as a specific example, mixing, milling, spray drying, or grinding.

When the molar ratio of lithium to other metals in the cathode active material in the annealing step S50 is 1:1, lithium in the cathode active material reacts with the coating agent in surface coating step S70, and the molar ratio of lithium to other metal in the cathode active material is less than 1:1. In this case, the capacity of a battery containing the recycled cathode active material may not be fully (up to 100 %) expressed. However, in annealing step S50, when an excess of the lithium precursor is added so that lithium is contained in a greater molar ratio of 0.0001 to 0.1 compared to other metals in the cathode active material, a surface protection layer is formed in surface coating step S60, and the molar ratio of lithium to other metals in the cathode active material becomes 1:1, thereby preventing battery capacity degradation.

### Secondary battery

A secondary battery of the present invention includes the recycled cathode active material. In this case, the internal and external resistance of a cathode active material may be reduced, and thus the efficiency, lifespan characteristics, and resistance characteristics of the secondary battery may be excellent. In addition, since acids and organic solvents are not used in the recovery and recycling of a cathode active material, eco-friendliness may be realized. In particular, since the pre-washing process is omitted, economics and productivity may be excellent.

Description of the secondary battery of the present invention may include all of the description of the recycled active material and the method of recycling a cathode active material described above, and thus repeated description is omitted in this specification.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

### [Examples]

### Example 1

After blanking a cathode plate, discarded cathode scraps (current collector: aluminum foil, cathode active material: NCMA-based lithium composite transition metal oxide (the mol% ratio of Ni:Co:Mn:Al being 88:7:4:1)) were crushed, and the crushed scraps were heat-treated at 570 °C for 30 minutes in air to remove a binder and a conductive material and separate a current collector and a cathode active material. Through these processes, the cathode active material was recovered. At this time, temperature was increased to the heat treatment temperature at a temperature increase rate of 5 °C/min, and air was supplied at a rate of 3 L/min.

The recovered cathode active material was sieved through a 325 mesh sieve to ensure a uniform particle size.

The sieved cathode active material was reheated at 600 °C for 5 hours in air.

LiOH as a lithium precursor was directly added to the reheat-treated cathode active material without pre-washing, and annealing was performed at 700 °C for 10 hours in air. In addition, air was supplied at 3 L/min. At this time, when the total lithium contained in a cathode active material in a raw material is 100 mol%, the lithium precursor was added in an amount capable of providing 15 mol% of lithium.

The annealed cathode active material and distilled water were mixed in a weight ratio of 1:1 and stirred at 300 rpm for 5 minutes. Then, post-washing was performed to obtain solids by vacuum filtration. The solids were vacuum-dried at 130 °C for 12 hours to obtain the washed cathode active material.

After coating the washed cathode active material with boric acid, heating was performed at 300 °C for 5 hours to obtain the final recycled cathode active material. At this time, boric acid was added in an amount corresponding to 500 ppm of boric acid lost in the post-washing process, the temperature increase rate was 2 °C/min until the heat treatment temperature was reached, and air was supplied at 3 L/min.

Here, the molar ratio of lithium and other metals in the cathode active material was measured using an IC analyzer. At this time, general IC analysis equipment widely used in laboratories may be used, but there is no deviation according to the measuring device or method.

### Comparative Example 1

After blanking a cathode plate, discarded cathode scraps (current collector: aluminum foil, cathode active material: NCMA-based lithium composite transition metal oxide (the mol% ratio of Ni:Co:Mn:Al being 88:7:4:1)) were crushed, and the crushed scraps were heat-treated at 570 °C for 30 minutes in air to remove a binder and a conductive material and separate a current collector and a cathode active material. Through these processes, the cathode active material was recovered. At this time, temperature was increased to the heat treatment temperature at a temperature increase rate of 5 °C/min, and air was supplied at a rate of 3 L/min.

Pre-washing of the recovered cathode active material was performed. Pre-washing was performed twice. For the first wash, the cathode active material and distilled water were mixed in a weight ratio of 1:30 and stirred at 300 rpm for 10 minutes. Then, vacuum filtration was performed to obtain the cathode active material. For the second washing, the cathode active material and distilled water were mixed in a weight ratio of 1:10, and washing was performed.

LiOH as a lithium precursor was added to the washed cathode active material, and then annealing was performed at 700 °C for 10 hours in air. At this time, air was supplied at 3 L/min. At this time, when the total lithium contained in a cathode active material in a raw material is 100 mol%, the lithium precursor was added in an amount capable of providing 15 mol% of lithium.

Post-washing of the annealed cathode active material was performed. Specifically, the cathode active material and distilled water were mixed in a weight ratio of 1:1 and stirred at 300 rpm for 5 minutes. Then, vacuum filtration was performed to obtain solids. The solids was subjected to vacuum drying at 130 °C for 12 hours to obtain the washed cathode active material.

The washed cathode active material was coated with boric acid and heated at 300 °C for 5 hours to obtain the final recycled cathode active material. At this time, boric acid was added in an amount corresponding to 1000 ppm of boron lost in the previous process, the temperature increase rate was 2 °C/min until the heat treatment temperature was reached, and air was supplied at 3 L/min.

### Comparative Example 2

The same procedure as in Comparative Example 1 was performed except that a lithium precursor was directly added to the cathode active material recovered after heat treatment without pre-washing, annealing was performed, and boron was added in an amount equivalent to 500 ppm to the post-washed cathode active material.

### Comparative Example 3

The same procedure as in Example 1 was performed except that the reheat treatment temperature was changed to 300 °C.

### Reference Example 1

Instead of a recycled cathode active material, a fresh NCMA-based lithium composite transition metal oxide (mol% ratio of Ni:Co:Mn:Al being 88:7:4:1) was used.

### [Test Example I: Resistance analysis and XRD analysis]

Resistance analysis and XRD analysis were performed on the recycled or fresh cathode active materials prepared in Example 1, Comparative Examples 1 to 3, and Reference Example 1, a-Axis lattice parameters, c-Axis lattice parameters, cell volumes, and crystallite sizes were measured as follows, and the results are shown in Table 1 and FIG. 2 below.

* Manufacture of electrode: 96.5 % by weight of the recycled or fresh cathode active material prepared in Example 1, Comparative Examples 1 to 3, and Reference Example 1, 1.5 % by weight of carbon black as a conductive material, and 2 % by weight of polyvinylidene fluoride (PVdF) as a binder were prepared and mixed with N-methyl-2-pyrrolidone (NMP) to obtain slurry. Aluminum foil was coated with the slurry to manufacture a cathode electrode. The manufactured electrode was embedded into an epoxy resin, and ion milling was performed to create a cross-section.

* Resistance analysis: For measurement of the manufactured electrode cross-section, the NX-10 AFM system (Park Systems Co.) with SSRM module was used as a scanning spreading resistance microscope, and SmartScan (Park Systems Co.) was used as an operating software. As specific driving conditions, the contact mode was set, image pixels to be acquired were set to 1024 × 1024, the scan rate was set to 0.2 Hz or more and 0.25 Hz or less, the bias was set to 2.0 V or less, and the set point was set to 1.0 V or less. In addition, as an AFM probe, solid diamond AFM probes (IMEC Co.) made of boron-doped polycrystalline diamond with a length of 465 µm, a width of 50 µm, and a thickness of 5 µm were used. The acquired resistance value data was processed and changed to log scale to obtain a log scale image. At this time, resistance value data from four different locations in the same electrode cross-section were measured, the average value thereof was taken as the average resistance, and the standard deviation of the average value was calculated as the average resistance standard deviation.

* XRD analysis: The lattice parameters and crystallite size were measured by XRD analysis, specifically, by X-ray diffraction (XRD) analysis using Cu Kα X-rays. The lattice parameter was calculated by indexing the XRD measurement data through Rietveld refinement, and the crystallite size was calculated using the XRD measurement data using the Scherrer equation. In addition, the cell volume was calculated as the product of the a-Axis lattice parameter and the c-Axis lattice parameter.

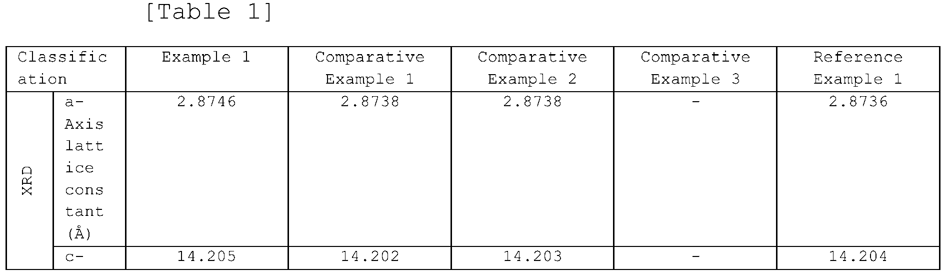

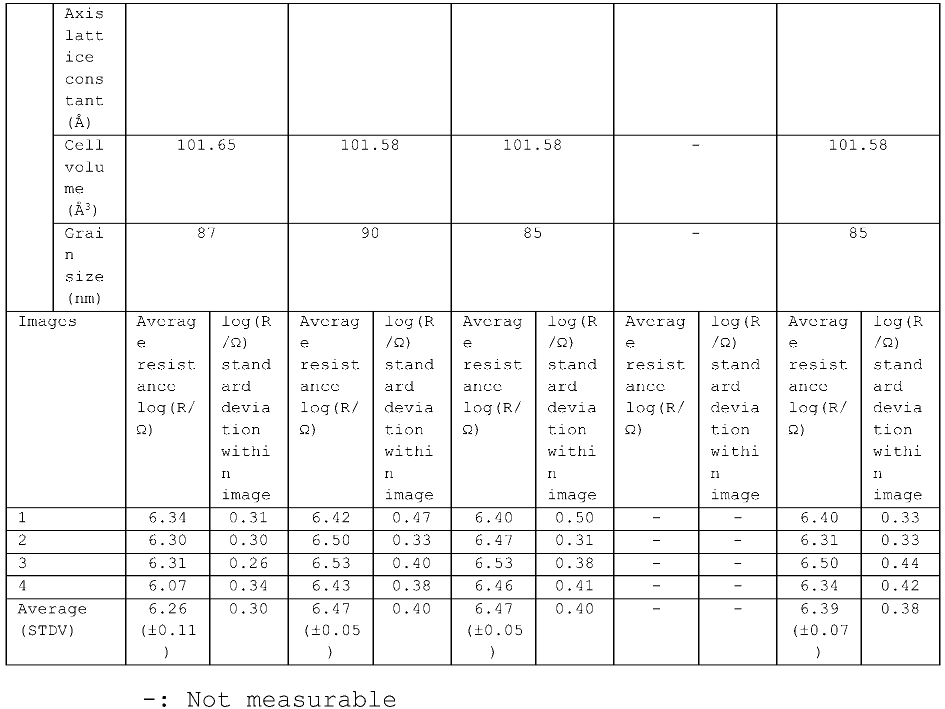

As shown in Table 1, the recycled cathode active material of Example 1 according to the present invention has an average resistance and a standard deviation thereof much lower than those of the recycled cathode active materials of Comparative Examples 1 and 2, and has an average resistance and a standard deviation thereof lower than those of the fresh cathode active material of Reference Example 1. These results showed that, in the case of Example 1 according to the present invention, by reheating the cathode active material recovered after heat treatment at a predetermined temperature for a predetermined time, impurities derived from a conductive material or binder were thoroughly removed, and thus an average resistance and an average resistance standard deviation within an image lower than those of the fresh cathode active material were exhibited. Accordingly, it was expected that the efficiency, lifespan characteristics, and resistance characteristics of the secondary battery would be improved.

In addition, as shown in Table 1, it was confirmed that the a-Axis lattice parameter, c-Axis lattice parameter, cell volume, and crystallite size, according to XRD analysis, of the recycled cathode active material of Example 1 according to the present invention were increased compared to those of the fresh cathode active material of Reference Example 1.

In addition, in the case of Comparative Example 3, the temperature of the reheat treatment was low, so a binder and a conductive material remained on the surface of the cathode active material after the reheat treatment, making it impossible to conduct resistance analysis and XRD analysis.

In addition, as shown in FIG. 2 below, the electrode manufactured using the recycled cathode active material (Example 1) according to the present invention had low resistance characteristics due to fewer high-resistance particles, and had resistance characteristics similar to those of the electrode manufactured using the fresh cathode active material (Reference Example 1). On the other hand, in the electrode manufactured using the recycled cathode active materials of Comparative Examples 1 and 2, compared to Example 1, a large number of cathode active materials, which are small particles with high resistance, was observed. These results indicate that the average resistance of the recycled cathode active material of Example 1 is low. In FIG. 2 below, the binder or epoxy resin is shown in orange. As the color darkens, the resistance increases. The cathode active material is shown in blue or light green. The closer to light green, the greater the increase in resistance. The conductive material is shown in light green.

### [Additional Example I]

### Additional Example 1

The same procedure as in Example 1 was performed except that reheat treatment was performed at 400 °C.

### Additional Comparative Example 1

The same procedure as in Example 1 was performed except that reheat treatment was performed at 800 °C.

### [Test Example II: Resistance analysis]

The resistance of the recycled cathode active materials prepared in Additional Example 1 and Additional Comparative Example 1 was analyzed in the same manner as in Test Example I, and the results are shown in Table 2 below.

**[Table 2]**

| Classification | Additional Example 1 | | Additional Comparative Example 1 | |
|---|---|---|---|---|
| Images | Average Resistance log(R/Ω) | Within image log(R/Ω) standard deviation | Average Resistance log(R/Ω) | Within image log(R/Ω) standard deviation |
| 1 | 6.38 | 0.44 | 6.47 | 0.55 |
| 2 | 6.43 | 0.42 | 6.55 | 0.43 |
| 3 | 6.42 | 0.38 | 6.44 | 0.49 |
| 4 | 6.3 | 0.39 | 6.5 | 0.42 |
| Average (STDV) | 6.38 (±0.06) | 0.41 | 6.49 (±0.05) | 0.47 |

As shown in Table 2, Additional Example 1 reheat-treated at 400 °C according to the present invention has an average resistance lower than that of the fresh cathode active material of Reference Example 1, indicating that the efficiency, lifespan characteristics, and resistance characteristics of a secondary battery are excellent. On the other hand, in the case of Additional Comparative Example 1 reheat-treated at 800 °C out of the range of the present invention, the average resistance is significantly increased, indicating that the performance of a secondary battery deteriorates.

### [Additional Example II]

### Reference Example 2

After a cathode plate was punched out, the surface of the discarded cathode scraps (current collector: aluminum foil, cathode active material: NCMA-based lithium composite transition metal oxide (the mol% ratio of Ni:Co:Mn:Al being 88:7:4:1)) was scratched to obtain cathode material powder.

### Reference Example 3

After a cathode plate was punched out, the discarded cathode scraps (current collector: aluminum foil, cathode active material: NCMA-based lithium composite transition metal oxide (the mol% ratio of Ni:Co:Mn:Al being 88:7:4:1)) were crushed and heated at 570 °C for 30 minutes in air to remove a binder and a conductive material and separate a current collector and a cathode active material. Then, the cathode active material was recovered. At this time, the temperature increase rate was 5 °C/min until the heat treatment temperature was reached, and air was supplied at 3 L/min.

### [Test Example III: TGA analysis]

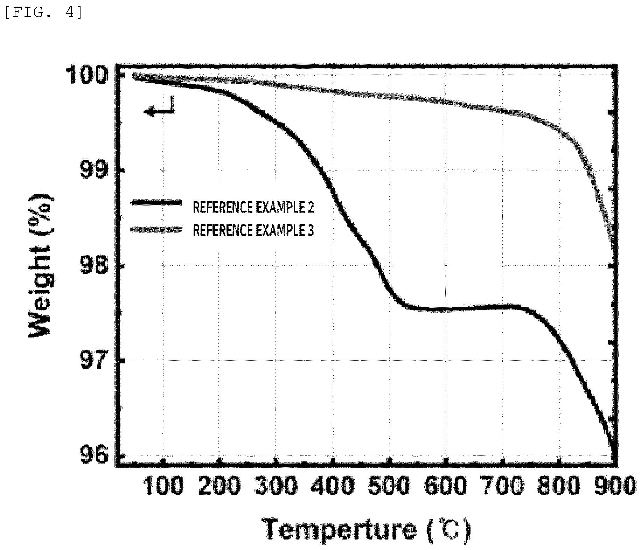

For the cathode material powder obtained in Reference Example 2 and the cathode active material recovered after heat treatment in Reference Example 3, weight change rate according to heat treatment time was analyzed using TGA, and the results are shown in FIG. 4 below. The temperature conditions for TGA analysis were starting at 50 °C and ending at 900 °C, with a heating rate of 5 °C/min.

As shown in FIG. 4 below, Reference Example 2 shows a large weight change at a heat treatment temperature of 300 to 750 °C. Accordingly, the temperature range for removing a binder and a conductive material from waste cathode material powder may be set to 300 to 750 °C. However, since the current collector melts above 650 °C, it was confirmed that the heat treatment temperature was desirable to be 300 to 650 °C.

In addition, for Reference Example 3, it can be seen that the weight change starts above 350 °C and the weight change occurs rapidly above 700 °C. Based on these results, it was found that the reheat treatment temperature for removing impurities derived from the binder and conductive material in the recovered cathode active material was preferably 350 to 700 °C.

In addition, the rapid weight change above 750 °C in Reference Example 3 was expected to be due to degradation and deterioration of the cathode active material, which would increase the battery resistance.

### [Description of Symbols]

- 10:: CURRENT COLLECTOR
- 20:: ACTIVE MATERIAL LAYER
- 30:: CATHODE SHEET
- 40:: CATHODE PLATE
- 50:: CATHODE SCRAP

## Claims

1. A method of recycling a cathode active material, comprising:
(a) thermally decomposing a binder and a conductive material in a cathode active material layer by heat-treating, at 300 to 650 °C, a waste cathode having the cathode active material layer formed on a current collector to separate the current collector from the cathode active material layer and recover a cathode active material in the cathode active material layer;
(b) reheating the recovered cathode active material at 350 to 700 °C for 1 to 10 hours;
(c) adding a lithium precursor to the reheat-treated cathode active material and performing annealing at 500 to 1000 °C;
(d) washing the annealed cathode active material with a washing solution; and
(e) surface-coating the washed cathode active material with a coating agent.

2. The method according to claim 1, wherein, in step (b), the reheat treatment temperature is 450 to 650 °C.

3. The method according to claim 1, wherein the cathode active material layer comprises one or more selected from the group consisting of a nickel·cobalt·manganese (NCM)-based cathode active material, a nickel·cobalt·aluminum (NCA)-based cathode active material, and a nickel·cobalt·manganese·aluminum (NCMA)-based cathode active material.

4. The method according to claim 1, wherein, in step (a), the heat treatment is performed for 30 minutes to 10 hours.

5. The method according to claim 1, wherein the heat treatment of step (a) or the reheat treatment of step (b) is performed in air or under an oxygen atmosphere.

6. The method according to claim 1, wherein the cathode active material reheat-treated in step (b) is subjected to the annealing of step (c) without washing.

7. The method according to claim 1, wherein, in step (c), the lithium precursor comprises one or more selected from the group consisting of LiOH, Li₂CO₃, LiNO₃, and Li₂O.

8. The method according to claim 1, wherein, in step (c), the lithium precursor is added at least in an amount corresponding to a reduced amount of lithium based on a molar ratio of lithium in the cathode active material of step (a) based on an amount of lithium in the reheat-treated cathode active material.

9. The method according to claim 1, wherein, in the washing of step (d), a weight ratio of the cathode active material to the washing solution is 1:0.5 to 1:4.

10. The method according to claim 1, wherein the washing of step (d) comprises mixing the annealed cathode active material and the washing solution and then performing filtration, and drying the solid cathode active material obtained after filtration.

11. The method according to claim 1, wherein the washing solution is water or a basic aqueous lithium compound solution.

12. The method according to claim 1, wherein the surface coating of step (e) is performed by coating a surface with one or more of a metal, an organic metal, and a carbon component in solid or liquid form and then performing heat treatment at 100 to 700 °C.

13. The method according to claim 1, wherein the recycled cathode active material obtained after the surface coating has an average resistance of 6.42 log(R/Ω) or less as measured using a scanning spreading resistance microscope (SSRM).

14. A cathode active material comprising one or more selected from the group consisting of lithium nickel oxide (LNO)-based cathode active materials, nickel·cobalt·manganese (NCM)-based cathode active materials, nickel·cobalt·aluminum (NCA)-based cathode active materials, and nickel·cobalt·manganese·aluminum (NCMA)-based cathode active materials,
wherein, when a cathode electrode is manufactured by coating aluminum foil with slurry obtained by mixing 96.5 % by weight of the cathode active material, 1.5 % by weight of carbon black, and 2 % by weight of polyvinylidene fluoride (PVdF) with N-methyl-2-pyrrolidone (NMP), the cathode electrode is embedded in an epoxy resin, and ion milling is performed to create a cross-section, the cross-section has an average resistance of 6.42 log(R/Ω) or less as measured using a scanning spreading resistance microscope (SSRM) and/or has an a-Axis lattice parameter of 2.8742 to 2.8750 Å, a c-Axis lattice parameter of 14.203 to 14.209 Å, and a cell volume of 101.62 to 101.68 Å³ as measured by X-ray diffraction.

15. The cathode active material according to claim 14, wherein the cathode active material has a crystallite size of 86 to 89 nm as measured by X-ray diffraction.

16. The cathode active material according to claim 14, wherein a surface of the cathode active material is coated with a coating agent containing a metal or carbon.
